# EUROPÄISCHE PATENTANMELDUNG

(11) **EP 2 523 379 A1**
(43) Veröffentlichungstag der Anmeldung: **14.11.2012**
(21) Anmeldenummer: 12003769.2
(22) Anmeldetag: 12.05.2012
(51) Int. Cl.: H04J 14/02

(54) **System zur Verteilung von Telekommunikationssignalen**

(30) Priorität: 13.05.2011 ES 201100545
(71) Anmelder: Televés, S.A., 15706 Santiago de Compostela (ES)
(72) Erfinder: Fernandez Carnero, José Luis, 15706 Santiago de Compostela (ES)
(74) Vertreter: Dosterschill, Peter

(57) **Zusammenfassung**

Die Erfindung betrifft ein System zur Verteilung von Telekommunikationssignalen, insbesondere für eine Benutzergemeinschaftsanlage, bestehend aus wenigstens einer Signalaufnahmeeinheit (1), einer Kopfeinheit (2) und einem ersten Signalverteilungsnetz (3), an das Benutzerendgeräte angeschlossen sind. Erfindungsgemäß ist vorgesehen dass das erste Signalverteilungsnetz (3) wenigstens ein Koaxialkabel (31) und ein optisches Kabel (32) aufweist.

## Beschreibung

Die vorliegende Erfindung betrifft ein System zur Verteilung von Telekommunikationssignalen, insbesondere ein System zur Verteilung von Telekommunikationssignalen für eine Benutzergemeinschaftsanlage (MATV/SMATV-System) nach dem Oberbegriff des Patentanspruchs 1.

Es sind schon MATV/SMATV-Systeme bekannt; dies sind Gemeinschaftssysteme zum Empfang, zur Verarbeitung und zur Verteilung von Telekommunikationssignalen, welche mittels einer gemeinschaftlichen Einrichtung den Transport der verschiedenen Telekommunikationssignale (Telekommunikationsdienste) zu den verschiedenen Benutzern einer Gemeinschaft von Nachbarn ermöglichen.

Ursprünglich waren die MATV-Systeme (Master-TV-Antenne) ausschließlich für den Empfang, die Verarbeitung und die Verteilung der Signale terrestrischen Fernsehens bestimmt; sie bestanden im Wesentlichen aus einer Signalaufnahmeeinheit, im allgemeinen eine Antenne für terrestrisches Fernsehen, eine Kopfeinheit, im allgemeinen eine Verstärkungseinrichtung, und einem Verteilungsnetz für den Transport der Signale bis zum Benutzer.

Später, als das Satellitenfernsehen aufkam, wurden die MATV-Systeme SMATV-Systeme (Satellit Master Antenna TV) benannt und ihre Komplexität nahm zu. Es wurden neue Signalaufnahmeeinrichtungen (zum Beispiel Parabolantennen für den Empfang von Satellitensignalen) eingeführt; die Kopfeinheiten waren nicht länger nur Verstärker und man führte Umwandlereinrichtungen, Transmodulatoren, Signalprozessoren, etc. ein. Auch wurde das Verteilungsnetz komplexer bzw. kritischer ausgestaltet; eine Vergrößerung der Anzahl von Frequenzen, eine Vergrößerung der Breite des übertragenen Bandes und die Vergrößerung von Verlusten bei der Verteilung wie auch mögliche Strahlungsprobleme des Netzes waren der Ausgangspunkt für die Entwicklung von Systemen bzw. Komponenten höherer Komplexität und Qualität, dies sowohl bei den Verteilelementen als auch bei den Kabeln des Verteilungsnetzes an sich.

Weiterhin gibt es auf dem Markt eine große Anzahl von Einrichtungen für diesen Typ von Gemeinschafts-Telekommunikationssystemen (MATV/SMATV-Systeme). Diese Einrichtungen betreffen im Wesentlichen den Empfang, die Anpassung und die Verteilung von Fernsehsignalen und von Radiosignalen, dies sowohl im terrestrischen Bereich als auch über Satelliten.

Jedoch findet in der jüngsten Zeit eine stürmische Entwicklung der MATV/SMATV-Systeme statt, die zu ausgesprochenen "Privatkabel-Informationsnetzen" führt. Diese Systeme unterstützen zudem die traditionellen Telekommunikationsdienste (Telekommunikationssignale) des terrestrischen Fernsehens und des Satellitenfernsehens, die Dienste für Video auf Abruf ä la carte, für Telefonie, Überwachung, Sicherheit, Energiesteuerung, und so weiter. Dies alles führt dazu, dass neben der Erhöhung der Komplexität und der Anzahl der in MATV/SMATV-Systeme (zur Zeit "Privatkabe-Informationsnetze") eingebundenen Einrichtungen die eigentlichen Kabel des Verteilungsnetzes sich als unzureichend für die wachsende Nachfrage nach Telekommunikationsdiensten (Telekommunikationssignale) und deren Verteilgeschwindigkeit erweisen.

Der vorliegenden Erfindung liegt die Aufgabe zugrunde, ein System zur Verteilung von Telekommunikationssignalen, insbesondere ein System zur Verteilung von Telekommunikationssignalen für eine Gemeinschaft von Nachbarn (MATV/SMATV-Systeme) zu schaffen, das die Ausweitung der Dienste zu den Benutzern sowie eine entsprechende Geschwindigkeit dieser Dienste ermöglicht.

Diese Aufgabe wird durch ein System zur Verteilung von Telekommunikationssignalen für eine Benutzergemeinschaftsanlage (MATV/SMATV-Systeme) gelöst, das in den Patentansprüchen definiert ist.

Die Erfindung hat eine Mehrzahl von Vorteilen.

Eine Ausführungsform des erfindungsgemäßen Systems zur Verteilung von Telekommunikationssignalen, insbesondere für eine Benutzergemeinschaftsanlage, besteht aus wenigstens einer Signalaufnahmeeinheit, einer Kopfeinheit und einem ersten Signalverteilungsnetz, an das Benutzerendgeräte angeschlossen sind, wobei das erste Signalverteilungsnetz wenigstens ein Koaxialkabel und ein optisches Kabel aufweist.

Damit wird der Vorteil erzielt, dass ein Verteilungsnetz mit einer vergleichsweise sehr viel größeren Kapazität für die Verteilung von Telekommunikationsdiensten (Telekommunikationssignalen) geschaffen wird. Damit wird die Verteilung von mehr Telekommunikationsdiensten und von Diensten ermöglicht, die eine große Bandbreite beanspruchen. Vorteilhaft ist weiterhin, dass durch die Benutzung der optischen Kabel sonst mögliche elektromagnetische Störungen des Verteilungsnetzes vermieden werden. Gleichzeitig wird erreicht, dass die Signale des Verteilungsnetzes immun gegenüber elektrischen Störungen werden. Schließlich werden Verluste, die durch das Verteilungsnetz eingeführt werden, drastisch vermindert.

Eine weitere vorteilhafte Ausführungsform des erfindungsgemäßen Systems ist dadurch gekennzeichnet, dass das erste Signalverteilungsnetz Verteilelemente aufweist, die optische Verteilelemente und/oder Hochfrequenzverteilelemente sind. Damit wird einerseits der Vorteil erzielt, dass bei Benutzung nur von optischen Verteilelementen ein Verteilnetz mit einer sehr viel größeren Bandbreite geschaffen wird. Andererseits wird damit der Vorteil erzielt, dass bei Benutzung der Hochfrequenzverteilelemente diese Netze kompatibel zu den existierenden Netzen gestaltet werden.

Eine weitere vorteilhafte Ausführungsform des erfindungsgemäßen Systems ist dadurch gekennzeichnet, dass die Verteilelemente optisch/elektrische Mischverteilelemente sind, die die Funktion der optischen Verteilelemente und der Hochfrequenzverteilelemente vereinen.

Eine weitere vorteilhafte Ausführungsform des erfindungsgemäßen Systems ist dadurch gekennzeichnet, dass die Verteilung über das optische Kabel des Verteilungssystems mittels eines Wellenlängenmultiplexen (WDM) der übertragenen Signale durchgeführt wird. Hierzu weist das System in einer Kopfeinheit 2 einen Multiplexer 215 auf, der ein Wellenlängenmultiplexen (WDM) der Telekommunikationssignale für ihre Verteilung über das optische Kabel 32 durchführt.

Eine weitere vorteilhafte Ausführungsform des erfindungsgemäßen Systems ist dadurch gekennzeichnet, dass das optische Kabel aus mindestens einer polymeren optischen Faser (POF) besteht.

Eine weitere vorteilhafte Ausführungsform des erfindungsgemäßen Systems weist ein erstes Signalverteilungsnetz auf, an das Benutzerendgeräte angeschlossen sind, wobei das erste Signalverteilungsnetz aus einem zweiten Verteilungsnetz und einem internen Wohnungsnetz besteht. Dieses System ist dadurch gekennzeichnet, dass das interne Wohnungsnetz aus einem optischen Kabel besteht, das mindestens eine polymere optische Faser POF aufweist.

Im Folgenden wird das Telekommunikationssignal-Verteilsystem (MATV/SMATV) gemäß der Erfindung beispielhaft, nicht einschränkend, anhand der Figuren beschrieben.

Es zeigt
- Figur 1: ein Telekommunikationssignal-Verteilungssystem (MATV/SMATV) gemäß der Erfindung, und
- Figur 2: ein Netz des Telekommunikationssignal-Verteilungssystems (MATV/- SMATV) gemäß der Erfindung.

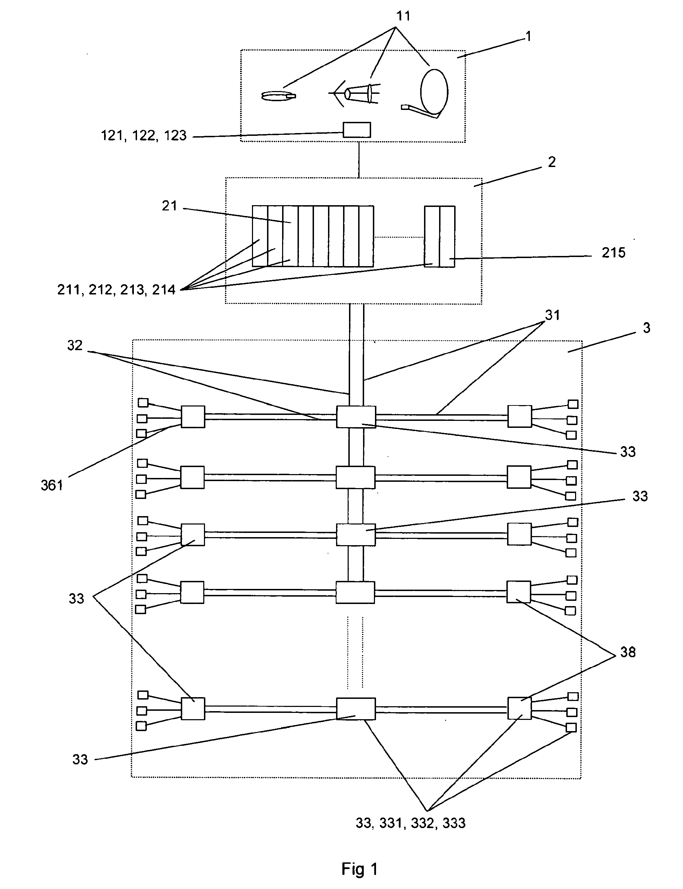

Wie in Figur 1 dargestellt weist das Telekommunikationssignal-Verteilungssystem (MATV/SMATV) gemäß der Erfindung eine Signalaufnahmeeinheit 1 auf, wo Antennen 11 und Vorrichtungen 12 wie beispielsweise Filter 121, Umwandler 122, Verstärker 123 usw. angeordnet sind. Das Telekommunikationssignal-Verteilungssystem weist auch eine Kopfeinheit 2 mit Modulen 21 auf, die Verstärker 211, Modulatoren 212, Umwandler 213, Prozessoren 214 usw. sein können.

Weiterhin weist ein Verteilnetz 3 wenigstens ein Koaxialkabel 31, ein optisches Übertragungsmedium, insbesondere ein optisches Kabel (Lichtwellenleiter, Glasfaserkabel) 32 sowie Verteilelemente 33 auf, die optische Verteilelemente 331 und/oder Hochfrequenzverteilelemente 332 und/oder Mischverteilelemente 333 sind.

Die Mischverteilelemente 333 enthalten sowohl Komponenten für die optische Verteilung und als auch Komponenten für die Hochfrequenzverteilung.

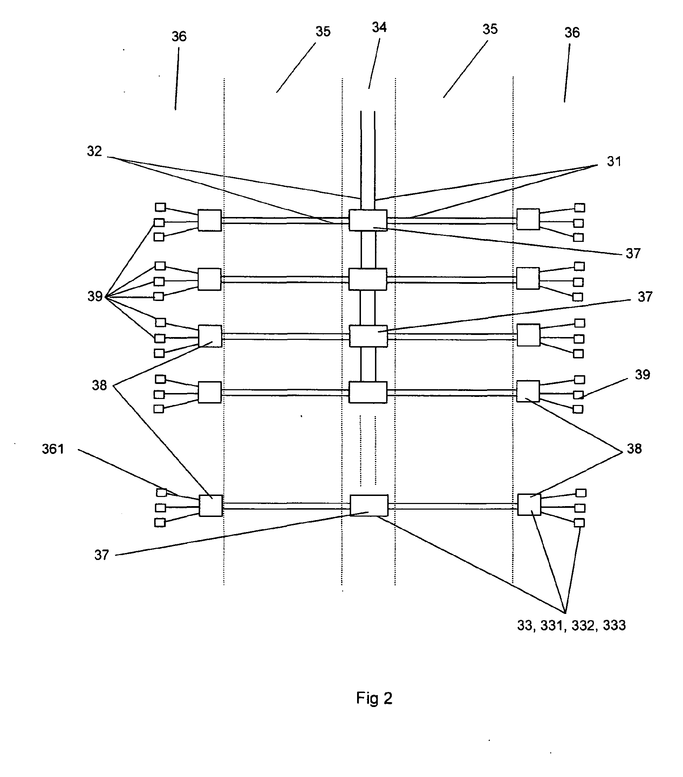

Wie in Figur 2 dargestellt, besteht das Verteilungsnetz eines erfindungsgemäßen Systems zur Verteilung von Telekommunikationssignalen (MATV/SMATV) aus einem Verteilungsnetz 34, einem Dispersionsnetz (Ableitungsnetz) 35 und aus einem internen Wohnungsnetz 36. Das Verteilungsnetz 34 und das Dispersionsnetz 35 bestehen aus mindestens einem Koaxialkabel 31 und/oder aus mindestens einem optischen Kabel 32. Das interne Wohnungsnetz 36 kann unter anderem Koaxialkabel, optische Kabel und/oder Kabel mit geflochtenen Adernpaaren usw. aufweisen, vorzugsweise weist es mindestens ein optisches Kabel 361 auf.

Die Verteilung über das optische Kabel 32 des Verteilungsnetzes 3 erfolgt mittels des Wellenlängenmultiplexen (Wavelength Division Multiplex, WDM) der übertragenen Signale. Hierzu verfügt das System zur Verteilung von Telekommunikationssignalen über eine Kopfeinheit 2 mit mindestens einem Multiplexer, der das Wellenlängenmultiplexen (Wavelength Division Multiplex, WDM) der Telekommunikationssignale für deren Verteilung über das optische Kabel 32 durchführt.

Zwischen dem optischen Kabel 32 des Verteilungsnetzes 34 und dem Dispersionsnetz 35 sind Verteilelemente 33 angeordnet, die aus Ableitelementen 37 bestehen. Diese Ableitelemente 37 sind Hochfrequenzverteilelemente 332 oder optische Verteilelemente 331, in Abhängigkeit davon, ob sie mit dem Koaxialkabel 31 oder mit dem optischen Kabel 32 verbunden sind; die Ableitelemente 37 können auch gemischte elektrisch/optische Mischverteilelemente 333 sein.

Zwischen dem Dispersionsnetz 35 und dem Wohnungsinnennetz 36 sind Verteielemente 33 angeordnet, die aus Benutzerzugangspunkten (PAU) 38 bestehen. Diese Benutzerzugangspunkte (PAU) 38 sind Hochfrequenzverteilelemente 332 oder optische Verteilelemente 331, in Abhängigkeit davon, ob sie mit dem Koaxialkabel 3 oder mit dem optischen Kabel 32 verbunden sind; die Benutzerzugangspunkte (PAU) 38 auch gemischte elektrisch/optische Mischverteilelemente 333 sein.

Das interne Wohnungsnetz 36 schließt in den Verteilelementen 33 ab, die aus Basiszugangsgeräten (BAT) 39 bestehen, die in den Wohnungen angeordnet sind.

Das interne Wohnungsnetz 36 besteht aus einem Kabel 361, das wenigstens aus einem optischen Kabel besteht, das insbesondere aus wenigstens einer polymeren optischen Faser POF besteht; bei Bedarf besteht das optische Kabel aus einer Mehrzahl polymerer optischer Fasern POF.

### Bezugszeichenliste

- 1: Signalaufnahmeeinheit

- 11: Antennen

- 12: Vorrichtungen
- 121: Filter
- 122: Umwandler
- 123: Verstärker

- 2: Kopfeinheit

- 21: Module
- 211: Verstärker
- 213: Umwandler
- 214: Prozessoren
- 215: Multiplexer

- 3: Signalverteilungsnetz für Benutzer

- 31: Koaxialkabel

- 32: Glasfaser, optisches Übertragungsmedium

- 33: Verteilelemente
- 331: Optische Verteilelemente
- 332: Hochfrequenzverteilelemente
- 333: Mischverteilelemente (mit Funktion von 331 und 332)

- 34: Verteilnetz

- 35: Dispersionsnetz, Ableitungsnetz, Netz mit optischem Kabel

- 36: Wohnungsinnennetz

- 361: (optisches) Kabel des Wohnungsinnennetzes

- 37: Ableiter

- 38: Zugangspunkte zum Benutzer (PAU)

- 39: Basiszugangsendgerät (BAT)

## Patentansprüche

1. System zur Verteilung von Telekommunikationssignalen, insbesondere für eine Benutzergemeinschaftsanlage, bestehend aus wenigstens einer Signalaufnahmeeinheit (1), einer Kopfeinheit (2) und einem ersten Signalverteilungsnetz (3), an das Benutzerendgeräte angeschlossen sind,
**dadurch gekennzeichnet,**
**dass** das erste Signalverteilungsnetz (3) wenigstens ein Koaxialkabel (31) und ein optisches Kabel (32) aufweist.

2. System nach Anspruch 1, **dadurch gekennzeichnet, dass** das erste Signalverteilungsnetz (3) Verteilelemente (33) aufweist, die optische Verteilelemente (331) und/oder Hochfrequenzverteilelemente (332) sind.

3. System nach Anspruch 2, **dadurch gekennzeichnet, dass** die Verteilelemente (33) Mischverteilelemente (333) sind, die sowohl die Funktion der optischen Verteilelemente als auch der Hochfrequenzverteilelemente haben.

4. System nach einem der vorstehenden Ansprüche, **dadurch gekennzeichnet, dass** das System wenigstens einen Multiplexer (215) aufweist, der ein Wellenlängenmultiplexen (WDM) der Telekommunikationssignale durchführt, die über das optische Kabel (32) übertragen werden.

5. System nach einem der vorstehenden Ansprüche, **dadurch gekennzeichnet, dass** das optische Kabel (32) aus mindestens einer polymeren optischen Faser (POF) besteht.

6. System zur Verteilung von Telekommunikationssignalen, insbesondere für eine Benutzergemeinschaftsanlage, bestehend aus wenigstens einer Signalaufnahmeeinheit (1), einer Kopfeinheit (2) und einem ersten Signalverteilungsnetz (3), an das Benutzerendgeräte angeschlossen sind, wobei das erste Signalverteilungsnetz (3) ein zweites Verteilungsnetz (34) und ein internes Wohnungsnetz (36) aufweist,
**dadurch gekennzeichnet,**
**dass** das interne Wohnungsnetz (36) wenigstens ein optisches Kabel (361) aufweist.

7. System nach Anspruch 6, **dadurch gekennzeichnet, dass** das erste Signalverteilungsnetz (3) Verteilelemente (33) aufweist, die optische Verteilelemente (331) und/oder Hochfrequenzverteilelemente (332) sind.

8. System nach Anspruch 7, **dadurch gekennzeichnet, dass** die Verteilemente (33) Mischverteilelemente (333) sind, die sowohl die Funktion der optischen Verteilelemente als auch der Hochfrequenzverteilelemente haben.

9. System nach einem der Ansprüche 6 bis 8, **dadurch gekennzeichnet, dass** das System wenigstens einen Multiplexer (215) aufweist, der ein Wellenlängenmultiplexen (WDM) der Telekommunikationssignale durchführt, die über das optische Kabel (32) übertragen werden.

10. System nach einem der Ansprüche 6 bis 9, **dadurch gekennzeichnet, dass** das optische Kabel (32) aus mindestens einer polymeren optischen Faser (POF) besteht.
